# EUROPÄISCHE PATENTSCHRIFT

(11) **EP 3 865 716 B1**
(45) Veröffentlichungstag und Bekanntmachung des Hinweises auf die Patenterteilung: **12.07.2023**
(21) Anmeldenummer: 21155221.1
(22) Anmeldetag: 04.02.2021
(51) Int. Cl.: F16B 2/10, F16B 5/06, A47B 47/00, F16B 21/16

(54) **KLAMMER ZUM LÖSBAREN VERBINDEN VON BAUELEMENTEN**
CLAMP FOR A DETACHABLE CONNECTION OF CONSTRUCTION ELEMENTS
CLIP DESTINÉ À LA LIAISON LIBÉRABLE DES COMPOSANTS

(30) Priorität: 14.02.2020 DE 102020201853
(43) Veröffentlichungstag der Anmeldung: 18.08.2021
(73) Patentinhaber: Brosche, Mario, 86415 Mering (DE)
(72) Erfinder: Brosche, Mario, 86415 Mering (DE)
(74) Vertreter: Vossius & Partner Patentanwälte Rechtsanwälte mbB

(56) Entgegenhaltungen:
- EP-A1- 3 509 416
- DE-U1-202014 103 445
- GB-A- 2 536 263

## Beschreibung

Die vorliegende Erfindung bezieht sich auf ein System zum lösbaren Verbinden von Bauelementen insbesondere zum lösbaren Verbinden von Bauelementen z.B. eines Möbelsystems, eines Ordnungs- oder Aufbewahrungssystems, eines Point-of-Sale-Displays, eines Möbelsystems oder einer Unterkunft für Haustiere, eines Bilderrahmens oder einer Transportverpackung.

Aus dem Stand der Technik sind Bausätze z.B. für Möbelsysteme bekannt, die zum lösbaren Verbinden der verschiedenen Elemente elastische Gummibänder bzw. Gummiringe verwenden.

Beispielsweise bezieht sich die DE 20 2014 103 445 U1 auf ein Stapelregalelement und ein Abdeckplattenelement, die zur Verwendung vorgesehen sind in einem modularen Stapelregal, das mindestens ein derartiges Stapelregalelement umfasst. Hierbei werden die verschiedenen Plattenelemente unter Verwendung von O-Ringen (Gummiringe) miteinander verbunden. Die Plattenelemente weisen vorstehende Randabschnitte mit einer Einbuchtung an entgegengesetzten Endbereichen auf. Die Randabschnitte eines ersten Plattenelements werden durch Langlöcher eines zweiten Plattenelements gesteckt und anschließend mit einem O-Ring fixiert, der in die Einbuchtungen eingreift.

Ferner bezieht sich die DE 20 2014 103 446 U1 auf ein Stehmöbelstück zum Beschicken mit einem Gegenstand und zum Aufbewahren und Entnehmen von einem Gegenstand, wobei auch hier die verschiedenen Plattenelemente mit O-Ringen (Gummiringe) miteinander verbunden werden.

Aus der EP 3 509 416 A1 und der GB 2 536 263 A sind Beispiele für Klammern bekannt.

Der vorliegenden Erfindung liegt die Aufgabe zugrunde, Systeme und Verfahren bereitzustellen, die eine stabile, einfache und langlebige lösbare Verbindung von Bauelementen ermöglicht.

Diese Aufgabe wird mit den Merkmalen der unabhängigen Patentansprüche gelöst. Die abhängigen Patentansprüche beziehen sich auf weitere Aspekte der Erfindung.

Gemäß einem Aspekt der vorliegenden Erfindung wird ein System mit mindestens einem ersten Bauelement, insbesondere einem ersten Plattenelement, und mindestens einem zweiten Bauelement, insbesondere einem zweiten Plattenelement, bereitgestellt. Das erste Bauelement weist mindestens einen vorstehenden Randabschnitt auf, wobei der Randabschnitt an seinen entgegengesetzten Endbereichen jeweils eine Einbuchtung aufweist und das zweite Bauelement mindestens ein Langloch aufweist, wobei der Randabschnitt das Langloch in einem zusammengebauten Zustand durchdringt und mindestens so weit aus dem Langloch herausragt, dass die Einbuchtungen zumindest teilweise aus dem Langloch herausragen. Das System weist ferner mindestens eine Klammer auf, um die Bauelemente lösbar miteinander zu verbinden. Die Klammer weist auf zwei Längselemente mit jeweils einem ersten und einem zweiten Ende, wobei die zwei Längselemente an dem jeweiligen ersten Ende beweglich miteinander verbunden sind; ein Verschlusselement, das an dem zweiten Ende mindestens eines Längselements vorgesehen ist, wobei das Verschlusselement konfiguriert ist, die zweiten Enden der Längselemente lösbar zu verbinden; und mindestens zwei Haltesegmente, die in gegenüberliegenden Endbereichen der Längselemente vorgesehen sind und konfiguriert sind, jeweils mit den Einbuchtungen des Randabschnitts des ersten Bauelements in Eingriff gebracht zu werden und die Bauelemente lösbar miteinander zu verbinden.

Die vorstehend genannten Enden (erstes und zweites Ende) der Längselemente sind in Längsrichtung der Längselemente ausgebildet.

Die vorstehend genannten Endbereiche der Längselemente sind ebenfalls in Längsrichtung der Längselemente ausgebildet.

Die Längselemente können eine horizontale Wölbung (Vorwölbung) in Längsrichtung aufweisen. Die Wölbung beträgt vorzugsweise 0,6 mm.

Dadurch können Produktionstoleranzen, speziell im Bereich des Randabschnitts und insbesondere im Bereich der Einbuchtungen, überbrückt werden.

Ferner kann die Langlebigkeit der Bauelemente, speziell im Bereich des Randabschnitts und insbesondere im Bereich der Einbuchtungen, erhöht werden. Insbesondere indem die Vorwölbung Stöße "abfedert" und somit die Einbuchtungen vor Abnutzung schützt.

Die mindestens zwei Haltesegmente werden vorzugsweise mit den Einbuchtungen des Randabschnitts des ersten Bauelements in Eingriff gebracht, wenn der Randabschnitt das Langloch durchdringt.

Die mindestens zwei Haltesegmente können eine maximale erste Höhe und das erste und/oder zweite Längselement eine minimale zweite Höhe aufweisen, wobei die erste Höhe geringer als die zweite Höhe ist.

Die jeweilige Höhe der mindestens zwei Haltesegmente und der Längselemente kann eine Ausdehnung der Elemente senkrecht zur Richtung vom ersten zum zweiten Ende der Längselemente und senkrecht zu einer Richtung von dem ersten Ende des ersten Längselements zu dem mit diesem verbundenen ersten Ende des zweiten Längselements bezeichnen.

Mit anderen Worten, die Richtung der jeweiligen Höhen kann senkrecht zu der Ebene stehen, in der die beiden Längselemente liegen.

Mit anderen Worten, die mindestens zwei Haltesegmente weisen vorzugsweise eine geringere Höhe als das erste und/oder zweite Längselement auf.

Durch diese Konfiguration kann erreicht werden, dass das erste und/oder zweite Längselement zumindest teilweise über die Haltesegmente, die in die Einbuchtungen eingreifen, hinausragen, um den Randabschnitt vor äußeren Einflüssen zu schützen und die Stabilität der Konstruktion, bedingt durch eine höhere Steifigkeit der formschlüssigen Verbindung, zu erhöhen.

Die erste Höhe kann einer Höhe (bzw. Länge) entsprechen, um die die Einbuchtungen aus dem Langloch herausragen. Mit anderen Worten, die Höhe der Haltesegmente kann einer Höhe entsprechen, um die die Einbuchtungen aus dem Langloch herausragen. Somit kann ein formschlüssiger Eingriff der Haltesegmente in die Einbuchtungen erreicht werden und die Stabilität der Konstruktion, bedingt durch eine höhere Steifigkeit der formschlüssigen Verbindung, erhöht werden.

Die Klammer kann ferner aufweisen: einen Endabschnitt, der konfiguriert ist, die beiden Längselemente beweglich, vorzugsweise gelenkig, zu verbinden.

Der Endabschnitt und/oder das Verschlusselement kann eine minimale dritte Höhe aufweisen, wobei die erste Höhe geringer als die dritte Höhe ist. Mit anderen Worten, die mindestens zwei Haltesegmente weisen vorzugsweise eine geringere Höhe als der Endabschnitt und/oder das Verschlusselement auf.

Die dritte Höhe kann eine Ausdehnung der Elemente senkrecht zur Richtung vom ersten zum zweiten Ende der Längselemente und senkrecht zu einer Richtung von dem ersten Ende des ersten Längselements zu dem mit diesem verbundenen ersten Ende des zweiten Längselements bezeichnen.

Durch diese Konfiguration kann erreicht werden, dass der Endabschnitt und/oder das Verschlusselement zumindest teilweise über die Haltesegmente, die in die Einbuchtungen eingreifen, hinausragen, um den Randabschnitt vor äußeren Einflüssen zu schützen und die Stabilität der Konstruktion, bedingt durch eine höhere Steifigkeit der formschlüssigen Verbindung, zu erhöhen.

Die zweite Höhe kann im Wesentlichen gleich der dritten Höhe sein. Mit anderen Worten, die Höhe des ersten und/oder zweiten Längselements kann gleich der Höhe des Endabschnitts und/oder des Verschlusselements sein.

Die zweite und/oder dritte Höhe kann mindestens der Länge entsprechen, die der Randabschnitt aus dem Langloch herausragt. Somit kann der Randabschnitt von den entsprechenden Elementen vor äußeren Einflüssen geschützt werden und gleichzeitig die Stabilität der verbundenen Bauelemente, bedingt durch eine höhere Steifigkeit der formschlüssigen Verbindung, erhöht werden.

Es ist vorteilhaft, dass die zweite und dritte Höhe mindestens der Länge entsprechen, die der Randabschnitt aus dem Langloch herausragt. Mit anderen Worten, es ist besonders vorteilhaft, wenn die Längselemente, der Endabschnitt und das Verschlusselement mindestens der Länge entsprechen, die der Randabschnitt aus dem Langloch herausragt. Dies erzeugt einen erhöhten Schutz des Randabschnitts und eine erhöhte Stabilität der Konstruktion, bedingt durch eine höhere Steifigkeit der formschlüssigen Verbindung.

Allerdings wird ein gewisser Schutz und/oder eine gewisse Stabilität bereits durch eine entsprechende Höhe (mindestens der Länge, die der Randabschnitt aus dem Langloch herausragt) mindestens eines der vorstehend genannten Elementen (Längselement, Endabschnitt und Verschlusselement) erzielt. Beispielsweise kann eine Seite des Randabschnitts, der besonders äußeren Einflüssen ausgesetzt ist, nur an dieser Seite durch ein erhöhtes Element, z.B. ein Längselement, geschützt sein, wobei die anderen Elemente eine geringere Höhe aufweisen. Somit kann bei erhöhtem Schutz vor äußeren Einflüssen, der Materialbedarf gesenkt werden.

Der Endabschnitt und/oder das Verschlusselement und/oder die zwei Längselemente kann/können mit dem Randabschnitt, der durch das Langloch ragt, (im zusammengebauten Zustand) bündig abschließen, wobei vorzugsweise der Endabschnitt, das Verschlusselement und die zwei Längselemente mit dem Randabschnitt, der durch das Langloch ragt, bündig abschließen.

Der Randabschnitt kann dabei verschieden ausgebildete Endabschnitte aufweisen. Beispielsweise kann der Endabschnitt des Randabschnitts eben ausgebildet sein, d.h. der Endabschnitt steht in einem rechten Winkel auf den Seitenflächen des Randabschnitts und ist im Wesentlichen eben ausgebildet. In diesem Fall, ist es bevorzugt, dass die vorstehend genannten Elemente der Klammer (Endabschnitt, Verschlusselement und Längselement) mit dem eben ausgebildeten Endabschnitt des Randabschnitts bündig abschließen.

Alternativ kann der Randabschnitt einen trapezförmig ausgebildeten Endabschnitt aufweisen. In diesem Fall umfasst der Endabschnitt erste Flächen, die unter einem Winkel an den Seitenflächen des Randabschnitts angebracht sind, und eine zweite Fläche, die im Wesentlichen einen rechten Winkel zu den Seitenflächen des Randabschnitts aufweist und die ersten Flächen verbindet. In dieser Ausführungsform können die vorstehend genannten Elemente der Klammer (Endabschnitt, Verschlusselement und Längselement) vorzugsweise an der Anschlussstelle der ersten Flächen und der Seitenflächen des Randabschnitts bündig abschließen.

Alternativ können die vorstehend genannten Elemente der Klammer (Endabschnitt, Verschlusselement und Längselement) in dieser Ausführungsform an der Anschlussstelle der zweiten Fläche und der ersten Flächen bündig abschließen.

In einer bevorzugten Ausführungsform kann der Randabschnitt einen abgerundet ausgebildeten Endabschnitt aufweisen. In dieser Ausführungsform können die vorstehend genannten Elemente der Klammer (Endabschnitt, Verschlusselement und Längselement) vorzugsweise an der Anschlussstelle des abgerundeten Endabschnitts und der Seitenflächen des Randabschnitts bündig abschließen.

Alternativ können die vorstehend genannten Elemente der Klammer (Endabschnitt, Verschlusselement und Längselement) in dieser Ausführungsform an einer vorbestimmten Stelle des abgerundeten Endabschnitts bündig abschließen.

Das bündige Abschließen der vorstehend genannten Elemente der Klammer (Endabschnitt, Verschlusselement und Längselement) und dem Randabschnitt bietet einen hohen Schutz vor äußeren Einflüssen des Randabschnitts und einen gleichzeitig hohen Schutz der entsprechenden Elemente der Klammer, da diese nicht über den Randabschnitt hinausragen und somit vor beispielsweise Abbrechen oder ungewolltem Öffnen bzw. Lösen geschützt sind.

Mindestens ein Haltesegment kann mit dem Endabschnitt und mindestens ein Haltesegment kann mit dem Verschlusselement verbunden sein.

Alternativ oder zusätzlich können die Haltesegmente mit den Längselementen verbunden sein.

Die mindestens zwei Haltesegmente können vier Haltesegmente aufweisen, die vorzugsweise gegenüberliegend in den jeweiligen Endbereichen der Längselemente angeordnet sind.

Die gegenüberliegenden Haltesegmente können gleich lang oder unterschiedlich lang ausgebildet sein und vorzugsweise in einem geschlossenen Zustand der Klammer in Berührung kommen oder einen geringen Abstand aufweisen.

Durch einen geringen Abstand der Haltesegmente, besonders bevorzugt 0,3 mm, kann eine erhöhte Stabilität sowie eine vorteilhafte Berücksichtigung von Fertigungstoleranzen erreicht werden.

Das Verschlusselement kann auf einer Oberseite eine Mehrzahl an Rillen, vorzugsweise parallel angeordnete Rillen, aufweisen.

Die Rillen können durch Ausbuchtungen auf der Oberseite des Verschlusselements ausgebildet werden. Alternativ kann die Oberfläche mit Vertiefungen ausgebildet werden.

Die Rillen erhöhen die Griffigkeit der Klammer und erleichtern so das Öffnen und Schließen der Klammer.

Das Verschlusselement kann ein erstes Verschlusselement und ein zweites Verschlusselement aufweisen, die formschlüssig zusammenwirken können.

Das erste Verschlusselement kann einen U-förmigen Bügel aufweisen und das zweite Verschlusselement kann eine Ausbuchtung aufweisen, die mit dem U-förmigen Bügel verschließbar zusammenwirken kann.

Der U-förmige Bügel kann einen Überriss und eine Ausnehmung aufweisen.

Diese Art von Ausgestaltung der Verschlusselemente ermöglicht einen Verschluss, der im verbauten Zustand nicht sichtbar ist. Ferner wird die gleiche Kraft für das Öffnen wie für das Schließen benötigt, unabhängig von Fertigungstoleranzen im Bereich des Randabschnittes, insbesondere im Bereich der Ausbuchtungen. Durch Aufschieben des Verschlusselements kann die Klammer einfach und komfortabel geöffnet werden.

Die Klammer, insbesondere das Verschlusselement der Klammer, kann ferner konfiguriert sein, dass die Klammer nur geschlossen bleibt, wenn die Klammer mit dem Randabschnitt, insbesondere den Einbuchtungen des Randabschnitts, in Eingriff steht.

Mit anderen Worten, die Klammer, insbesondere das Verschlusselement der Klammer, kann konfiguriert sein, dass durch den Randabschnitt, insbesondere die Einbuchtungen des Randabschnitts, eine Kraft auf das Verschlusselement wirkt, die einen dauerhaften Verschluss der Klammer bewirkt. Dieser Verschluss kann vorzugsweise nur mit einer gewissen Kraftaufwendung durch einen Nutzer geöffnet werden.

Weist das erste Verschlusselement beispielsweise eine Vertiefung auf seiner Unterseite auf und das zweite Verschlusselement eine entsprechende Ausbuchtung auf seiner Oberseite auf, die mit der Vertiefung verschließbar zusammenwirken kann, wird durch den Randabschnitt, insbesondere die Einbuchtungen des Randabschnitts, eine bestimmte Kraft auf das/die Haltesegment/Haltesegmente ausgeübt. Diese Krafteinwirkung drückt die Vertiefung des ersten Verschlusselements auf die Ausbuchtung des zweiten Verschlusselements und hält die Klammer somit in einem geschlossenen Zustand.

Mit anderen Worten, das erste Verschlusselement kann eine Vertiefung auf seiner Unterseite aufweisen. Das zweite Verschlusselement kann eine Ausbuchtung auf seiner Oberseite aufweisen, die mit der Vertiefung verschließbar zusammenwirken kann.

Die Unterseite des ersten Verschlusselements kann eine der Oberseite des zweiten Verschlusselements zugewandte Fläche sein.
Auch diese Art der Ausgestaltung der Verschlusselemente ermöglicht einen Verschluss, der im verbauten Zustand nicht sichtbar ist. Durch eine geeignete Auswahl der vorstehend genannten Fertigungstoleranzen der Ausbuchtungen ist die zum Öffnen und Schließen der Klammer benötigte Kraft einstellbar.

Die Klammer ist vorzugsweise einstückig ausgebildet.

Der Endabschnitt weist vorzugsweise eine T-förmige Ausnehmung auf. Die T-förmige Ausnehmung kann die Spannung beim Schließen und Öffnen an der geschlossenen Seite (Endabschnitt) der Klammer reduzieren. Ferner können Fertigungstoleranzen des Randabschnitts (bezogen auf die Länge) ausgeglichen werden, da sich die innen angrenzenden Elemente der T-förmigen Ausnehmung nach außen verdrängen lassen.

Die bewegliche Verbindung der zwei Längselemente kann eine Vorspannung aufweisen, so dass sich das Verschlusselement ohne äußere Krafteinwirkung in einem geöffneten Zustand befindet. Hierdurch kann die Handhabbarkeit der Klammer erhöht werden.

Die Längselemente und/oder der Endabschnitt und/oder das Verschlusselement können einen Querschnitt entsprechend eines Rechtecks, vorzugsweise eines Trapez und besonders bevorzugt 1/4 einer Ellipse aufweisen.

Vorzugsweise entsprechen der Querschnitt der Längselemente und/oder des Endabschnitts und/oder des Verschlusselements der Form des vorstehend beschriebenen Endabschnitts des Randabschnitts. Somit kann die Klammer möglichst formschlüssig mit dem Randabschnitt abschließen und einen erhöhten Schutz vor äußeren Einflüssen auf den Randabschnitt und die Klammer erzielen.

Die Einbuchtungen an den entgegengesetzten Endbereichen des Randabschnitts können gleich groß sein. Somit wirken auf beiden Seiten die gleichen Kräfte. Dies erhöht die Festigkeit und die Sicherheit der verbundenen Bauelemente.

Die Längselemente können eine Ebene in Längsrichtung definieren und die Klammer kann in beiden Richtungen senkrecht zu der Ebene offen sein. Dies ermöglicht ein leichtes und komfortables Anbringen der Klammer auch an schwer erreichbaren/zugänglichen Positionen.

Die Klammer besteht vorzugsweise aus einem Kunststoffmaterial und wird durch Spritzgusstechnik hergestellt.

Dies hat den Vorteil, dass die Klammer kostengünstig, einfach, individuell, z.B. in unterschiedlichen Farben, mit einer matten und glänzenden Oberfläche, und in verschiedenen Formen hergestellt werden kann.

Die Klammer kann eine Breite zwischen 7 mm und 40 mm, vorzugsweise zwischen 7 mm und 24 mm und besonders bevorzugt zwischen 8 mm und 22 mm.

Insbesondere kann die Klammer vorzugsweise eine Breite von 8 mm, 10 mm, 12 mm oder 22 mm aufweisen.

Die Breite der Klammer entspricht der Ausdehnung der Klammer von einem Längselement zum anderen Längselement im geschlossenen Zustand der Klammer.

Die Öffnung zwischen den Längselementen der Klammer kann zwischen 3 mm bis 30 mm betragen.

Die Öffnung kann sich in Längsrichtung der Längselemente zwischen 20 mm und 100 mm erstrecken.

Bei einer Breite von 8 mm kann der Abstand zwischen den Längselementen vorzugsweise 4 mm betragen und der Abstand zwischen dem Endabschnitt und dem Verschlusselement, d.h. die Erstreckung der Öffnung in Längsrichtung der Längselemente, kann 40 mm betragen.

Die Länge der Klammer kann zwischen 28 mm bis 116 mm betragen.

Bei einer Breite von 8 mm kann die Länge der Klammer vorzugsweise 48 mm betragen.

Die Länge der Klammer erstreckt sich in Längsrichtung der Längselemente.

Die Höhe der Klammer, d.h. der Längselemente und/oder des Endabschnitts und/oder des Verschlusselements kann vorzugsweise zwischen 4,5 mm bis 9,0 mm betragen.

Bei einer Breite von 8 mm kann die Höhe der Klammer vorzugsweise 4,8 mm betragen.

Gemäß eines weiteren Aspekts der vorliegenden Erfindung wird ein Verfahren zum lösbaren Verbinden eines ersten Bauelements, insbesondere eines ersten Plattenelements, mit einem zweiten Bauelement, insbesondere einem zweiten Plattenelement, bereitgestellt. Das erste Bauelement weist mindestens einen vorstehenden Randabschnitt auf, wobei der mindestens eine Randabschnitt an seinen entgegengesetzten Endbereichen jeweils eine Einbuchtung aufweist und das zweite Bauelement mindestens ein Langloch aufweist. Das Verfahren weist auf Durchführen des Randabschnitts durch das Langloch, vorzugsweise von einer ersten Seite des zweiten Bauelements zu einer zweiten Seite des zweiten Bauelements, so dass mindestens ein Teil des Randabschnitts soweit aus dem Langloch herausragt, dass die Einbuchtungen zumindest teilweise aus dem Langloch (auf der zweiten Seite des zweiten Bauelements) herausragen; und lösbares Verbinden des ersten Bauelements mit dem zweiten Bauelement unter Verwendung einer Klammer, wobei die Klammer aufweist: zwei Längselemente mit jeweils einem ersten und einem zweiten Ende, wobei die zwei Längselemente an dem jeweiligen ersten Ende beweglich miteinander verbunden sind; ein Verschlusselement, das an dem zweiten Ende mindestens eines Längselements vorgesehen ist, wobei das Verschlusselement konfiguriert ist die zweiten Enden der Längselemente lösbar zu verbinden; und mindestens zwei Haltesegmente, die in gegenüberliegenden Endbereichen der Längselemente vorgesehen sind und konfiguriert sind, jeweils mit den Einbuchtungen des Randabschnitts des ersten Bauelements in Eingriff gebracht zu werden und die Bauelemente lösbar miteinander zu verbinden.

Ein weiterer Aspekt der vorliegenden Erfindung betrifft die Verwendung des vorstehend beschriebenen Systems zum Zusammenbau eines Möbelsystems, eines Ordnungs- oder Aufbewahrungssystems, eines Point-of-Sale-Displays, eines Möbelsystems oder einer Unterkunft für Haustiere, eines Bilderrahmens oder einer Transportverpackung.

Möbelsysteme oder eine Unterkunft für Haustiere umfassen verschiedene Gebrauchsgegenstände, die im Zusammenhang mit Haustieren innerhalb oder außerhalb von Wohnungen und Häusern verwendet werden, wie z.B. Schlafplätze, Spielgeräte und Kratzbäume etc.

Die Klammern der vorliegenden Erfindung werden insbesondere nicht durch wirkende Scherkräfte beschädigt und weisen somit eine gegenüber dem Stand der Technik erhöhte Langlebigkeit aus. Ferner kann eine erhöhte Stabilität, bedingt durch eine höhere Steifigkeit der formschlüssigen Verbindung, der Möbelstücke im zusammengebauten Zustand erzielt werden. Die Randabschnitte werden durch die Klammern der vorliegenden Erfindung vorteilhaft vor äußeren Krafteinwirkungen wie Stößen o.ä. geschützt. Die Handhabung der Klammern der vorliegenden Erfindung ist zudem komfortabel und bedarf keines großen Kraftaufwands, um die Klammern auf den Randabschnitten zu positionieren bzw. zu schließen und zu öffnen.

Die Klammer kann ohne Zuhilfenahme von Werkzeugen verwendet werden, d.h. die Klammer kann insbesondere von Hand geschlossen und wieder geöffnet werden.

Mit anderen Worten kann durch die vorliegende Erfindung u.a. ein erhöhter Schutz gegen äußere Einflüsse und eine erhöhte Festigkeit der verbundenen Bauelemente erreicht werden. Ferner zeichnet sich die vorliegende Erfindung durch eine einfache Handhabung, günstige Herstellung und ästhetische Wertigkeit aus. Weitere vorteilhafte Effekte und Wirkungen der vorliegenden Erfindung kann der Fachmann u.a. der nachfolgenden näheren Beschreibung der Erfindung entnehmen.

Nachfolgend wird die vorliegende Erfindung anhand von Ausführungsbeispielen und der Figuren näher erläutert. Es zeigen:
Fig. 1 eine perspektivische Darstellung einer Klammer gemäß einer Ausführungsform der Erfindung,
Fig. 2 eine Draufsicht der Klammer im geöffneten Zustand gemäß Fig. 1,
Fig. 3 eine Seitenansicht der Klammer gemäß Fig. 1,
Fig. 4 eine Ansicht von unten der Klammer im geöffneten Zustand gemäß Fig. 1,
Fig. 5 eine Draufsicht der Klammer im geschlossenen Zustand gemäß Fig. 1,
Fig. 6 eine Draufsicht einer Klammer im geöffneten Zustand gemäß einer Ausführungsform der Erfindung,
Fig. 7 eine Seitenansicht der Klammer im geöffneten Zustand gemäß Fig. 6,
Fig. 8 eine Ansicht von unten der Klammer im geöffneten Zustand gemäß Fig. 6,
Fig. 9 eine Draufsicht einer Klammer im geöffneten Zustand gemäß einer Ausführungsform der Erfindung,
Fig. 10 eine Seitenansicht der Klammer im geöffneten Zustand gemäß Fig. 9,
Fig. 11 eine Ansicht von unten der Klammer im geöffneten Zustand gemäß Fig. 9,
Fig. 12 eine Draufsicht einer Klammer im geöffneten Zustand gemäß einer Ausführungsform der Erfindung,
Fig. 13 eine Ansicht von unten der Klammer im geöffneten Zustand gemäß Fig. 12,
Fig. 14 eine Draufsicht der Klammer im geschlossenen Zustand gemäß Fig. 12,
Fig. 15 eine Ansicht von vorne einer Klammer im geschlossenen Zustand gemäß einer Ausführungsform der Erfindung,
Fig. 16 eine Draufsicht der Klammer im geschlossenen Zustand gemäß Fig. 15,
Fig. 17 eine Ansicht von unten der Klammer im geschlossenen Zustand gemäß Fig. 15,
Fig. 18 eine perspektivische Darstellung einer Klammer gemäß einer Ausführungsform der Erfindung,
Fig. 19 eine Draufsicht der Klammer im geschlossenen Zustand gemäß Fig. 18,
Fig. 20 eine Seitenansicht der Klammer im geschlossenen Zustand gemäß Fig. 18,
Fig. 21 eine schematische Darstellung eines ersten Bauelements gemäß einer Ausführungsform der Erfindung,
Fig. 22 eine schematische Darstellung eines zweiten Bauelements gemäß einer Ausführungsform der Erfindung,
Fig. 23 eine schematische Darstellung eines ersten und zweiten Bauelements gemäß einer Ausführungsform der Erfindung,
Fig. 24 eine schematische Darstellung der Verbindung eines ersten und zweiten Bauelements mit einer Klammer im geöffneten Zustand gemäß einer Ausführungsform der Erfindung,
Fig. 25 eine schematische Darstellung der Verbindung eines ersten und zweiten Bauelements mit einer Klammer im geschlossenen Zustand gemäß einer Ausführungsform der Erfindung,
Fig. 26 eine schematische Darstellung eines beispielhaften Systems gemäß einer Ausführungsform der Erfindung, und
Fig. 27 eine schematische Darstellung eines weiteren beispielhaften Systems gemäß einer Ausführungsform der Erfindung.

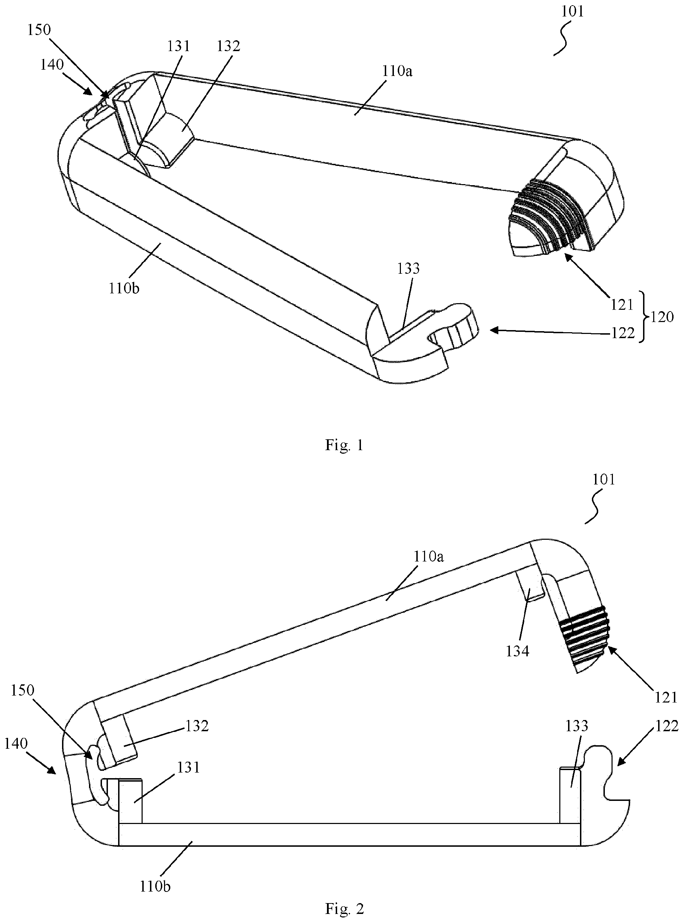

Mit Bezug auf die Figuren 1 bis 5 wird eine erste Ausführungsform einer erfindungsgemäßen Klammer 101 nachfolgend näher erläutert. Die Klammer 101 weist ein erstes Längselement 110a und ein zweites Längselement 110b auf. Die Längselemente 110a, 110b sind an einem jeweiligen ersten Ende durch einen Endabschnitt 140 beweglich (gelenkig) miteinander verbunden.

Die Längselemente 110a, 110b weisen einen Querschnitt auf, der 1/4 einer Ellipse entspricht, wobei die Innenseiten der Längselemente 110a, 110b flach ausgebildet und zueinander ausgerichtet sind.

Der Endabschnitt 140 weist eine Vorspannung auf, sodass die Klammer 101 ohne äußere Krafteinwirkung in einem geöffneten Zustand ist. Mit anderen Worten, die Vorspannung des Endabschnitts 140 sorgt für einen Winkel zwischen dem ersten Längselement 110a und dem zweiten Längselement 110b. Der Winkel zwischen dem ersten und zweiten Längselement 110a, 110b ist vorzugsweise zwischen 6° und 30° und besonders bevorzugt zwischen 12° und 15°.

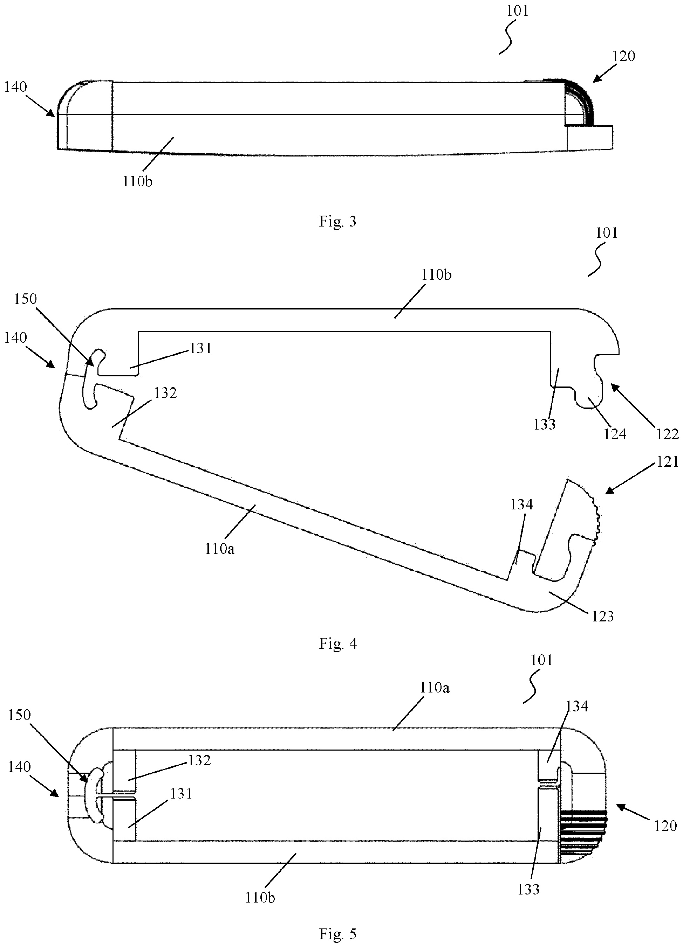

Wie in Fig. 5 zu sehen, sind die beiden Längselemente 110a, 110b in einem geschlossenen Zustand der Klammer 101 im Wesentlichen parallel zueinander.

Vorzugsweise werden die Längselemente mit einer nach innen gerichteten vertikalen Vorwölbung von ca. 0,3 mm bereitgestellt, damit die Längselemente besser am Randabschnitt anliegen.

Der Endabschnitt 140 weist ferner eine T-förmige Ausnehmung 150 zur Spannungsreduzierung und zum Ausgleich von Produktionstoleranzen auf. Die T-förmige Ausnehmung 150 ist zentriert im Endabschnitt 140 angeordnet.

Mit anderen Worten, die T-förmige Ausnehmung 150 teilt den Endabschnitt 140 in zwei gleich große Teile durch eine erste Ausnehmung, die sich in einem geschlossenen Zustand der Klammer 101 parallel zu den Längselementen 110a, 110b erstreckt. Die T-förmige Ausnehmung 150 weist ferner eine zweite Ausnehmung auf, die im Wesentlichen senkrecht auf der ersten Ausnehmung angeordnet ist, wobei die erste Ausnehmung im Wesentlichen mittig an der zweiten Ausnehmung angeordnet ist.

Wie in den Figuren 1-5 zu sehen, weist die zweite Ausnehmung eine Krümmung in Richtung der ersten Ausnehmung (in Richtung der Längselemente 110a, 110b) auf.

Die Klammer 101 weist ferner vier Haltesegmente 131-134 auf. Das erste Haltesegment 131 und das zweite Haltesegment 132 sind an einer Innenseite des Endabschnitts 140 und einer Innenseite der jeweiligen Längselemente 110a, 110b angeordnet.

Das erste Haltesegment 131 und das zweite Haltesegment 132 ragen in die Klammeröffnung hinein. Das erste Haltesegment 131 und das zweite Haltesegment 132 sind vorzugsweise gleich lang und weisen vorzugsweise eine geringere Höhe als die Längselemente 110a, 110b und der Endabschnitt auf.

Wie in Fig. 1 ersichtlich, nimmt die Höhe des ersten Haltesegments 131 und des zweiten Haltesegments 132 in Richtung des Endabschnitts 140 graduell zu bzw. in Richtung des Innenraums der Klammer 101 graduell ab.

Am gegenüberliegenden Ende der Längselemente 110a, 110b sind das dritte Haltesegment 133 und das vierte Haltesegment 134 angeordnet.

Die Höhe des dritten Haltesegments 133 und des vierten Haltesegments 134 nimmt in Richtung des Verschlusselements 120 zu bzw. in Richtung des Innenraums der Klammer 101 graduell ab (in den Figuren nicht gezeigt).

Das dritte Haltesegment 133 ragt weiter in den Innenraum der Klammer 101 als das vierte Haltesegment 134.

Die Klammer 101 weist ferner ein Verschlusselement 120 an dem dem Endabschnitt 140 gegenüberliegenden Ende der Längselemente 110a, 110b auf.

Das Verschlusselement 120 weist ein erstes Verschlusselement 121 und ein zweites Verschlusselement 122 auf.

Das erste Verschlusselement 121 weist einen U-förmigen Bügel 123 auf. Das zweite Verschlusselement 122 weist eine entsprechende Ausbuchtung 124 auf.

Der U-förmige Bügel 123 ist am ersten Längselement 110a angeordnet und zur Innenseite des ersten Längselements 110a geöffnet.

Die Ausbuchtung 124 ist so ausgebildet, dass sie in der Öffnung des U-förmigen Bügels 123 aufgenommen werden kann.

Der U-förmige Bügel 123 weist an einem Ende eines seiner Schenkel einen nach innen gerichteten Vorsprung auf.

Das zweite Verschlusselement 122 weist ferner eine Ausnehmung aus, in die der Vorsprung des U-förmigen Bügels 123 eingreifen kann, um die Klammer 101 in einem geschlossenen Zustand zu halten.

Das erste Verschlusselement 121 kann ferner auf seiner Oberseite ein Griffelement aufweisen. Das Griffelement kann mehrere parallel angeordnete Rillen (eine Rillenstruktur) aufweisen.

Das dritte und vierte Haltesegment 133, 134 ist jeweils sowohl an den Längselementen 110a, 110b als auch an den Verschlusselementen 121, 122 angeordnet.

Die Längselemente 110a, 110b, der Endabschnitt 140 und das Verschlusselement 120 weisen eine im Wesentlichen einheitliche Höhe auf und sind nach oben abgerundet, wobei gemäß einer Ausführungsform eine horizontale Vorwölbung der Längselemente in Längsrichtung um ca. 0,6 mm bereitgestellt werden kann.

Wie in Fig. 5 zu sehen, weist die Klammer 101 im geschlossenen Zustand eine durchgehende Öffnung auf, die durch die Längselemente 110a, 110b, den Endabschnitt 140 und das Verschlusselement 120 gebildet wird.

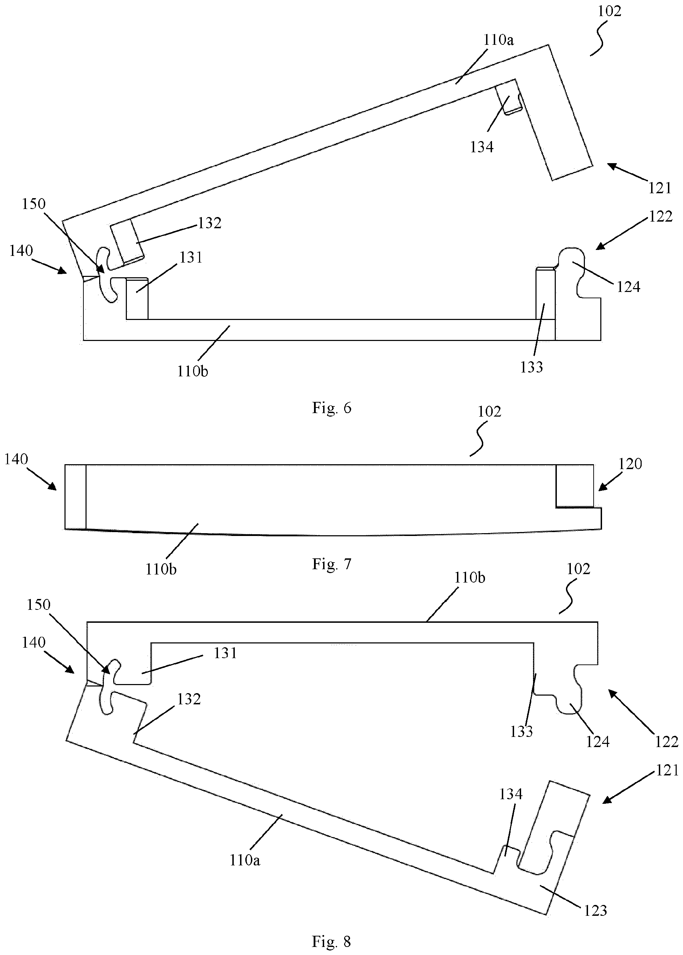

Mit Bezug auf die Figuren 6 bis 8 wird eine zweite Ausführungsform einer erfindungsgemäßen Klammer 102 nachfolgend näher erläutert. Die vorstehenden Ausführungen zur ersten Ausführungsform gelten im Wesentlichen auch für die zweite Ausführungsform. Nachfolgend werden lediglich die Unterschiede zur ersten Ausführungsform beschrieben, um unnötige Wiederholungen zu vermeiden.

Die zweite Ausführungsform unterscheidet sich von der ersten Ausführungsform durch die Form der Längselemente 110a, 110b, des Endabschnitts 140 und des Verschlusselements 120. Insbesondere weisen die Längselemente 110a, 110b, der Endabschnitt 140 und das Verschlusselement 120 gemäß der zweiten Ausführungsform eine rechteckige Form auf.

Mit anderen Worten, die Längselemente 110a, 110b, der Endabschnitt 140 und das Verschlusselement 120 gemäß der zweiten Ausführungsform sind nicht nach oben abgerundet wie bei der ersten Ausführungsform sondern mit senkrecht zueinander stehenden Flächen ausgebildet.

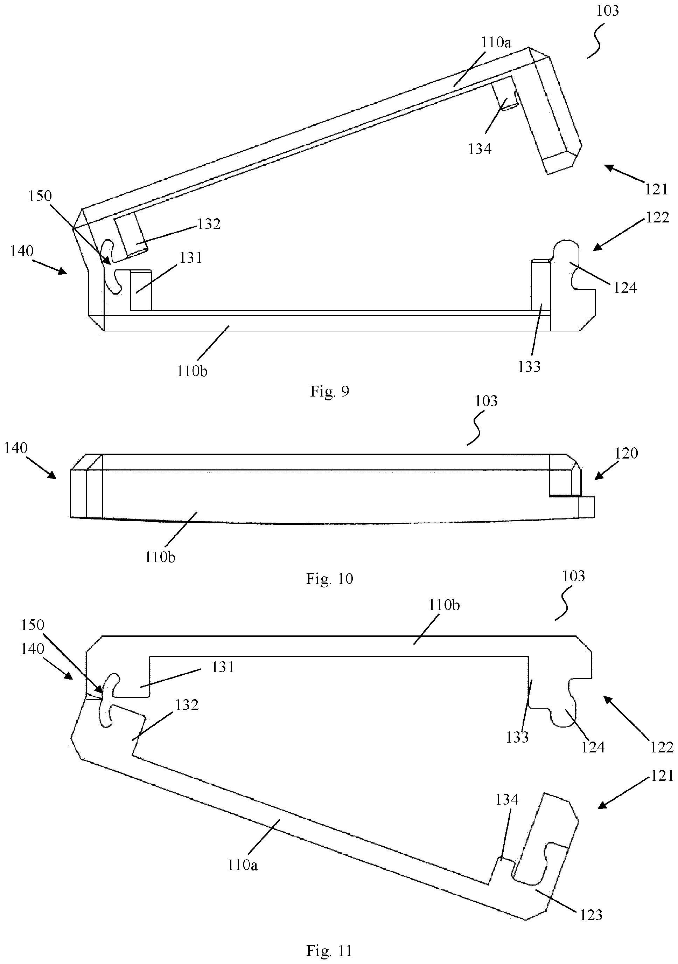

Mit Bezug auf die Figuren 9 bis 11 wird eine dritte Ausführungsform einer erfindungsgemäßen Klammer 103 nachfolgend näher erläutert. Die vorstehenden Ausführungen zur ersten Ausführungsform gelten im Wesentlichen auch für die dritte Ausführungsform. Nachfolgend werden lediglich die Unterschiede zur ersten Ausführungsform beschrieben, um unnötige Wiederholungen zu vermeiden.

Die dritte Ausführungsform unterscheidet sich von der ersten Ausführungsform durch die Form der Längselemente 110a, 110b, des Endabschnitts 140 und des Verschlusselements 120. Insbesondere weisen die Längselemente 110a, 110b, der Endabschnitt 140 und das Verschlusselement 120 gemäß der dritten Ausführungsform eine Trapezform auf.

Mit anderen Worten, die Längselemente 110a, 110b, der Endabschnitt 140 und das Verschlusselement 120 gemäß der dritten Ausführungsform sind nicht nach oben abgerundet wie bei der ersten Ausführungsform sondern mit geraden Flächen ausgebildet, die jeweils unter einem Winkel (≠90°) zueinander ausgebildet sind.

Beispielsweise weisen die Längselemente 110a, 110b zwei senkrechte Seitenflächen, eine waagerechte untere Fläche und eine waagerechte obere Fläche auf. Die waagerechte untere Fläche verbindet die Seitenflächen jeweils unter einem Winkel von 90°. Die nach außen liegende Seitenfläche ist nach oben kürzer als die nach innen liegende Seitenfläche. Die waagerechte obere Fläche ist direkt mit der nach innen liegende Seitenfläche unter einem Winkel von 90° verbunden. Eine schräge Fläche verbindet die kürzere Seitenfläche mit der waagerechten Oberseite. Somit bildet ein entsprechendes Längselement im Querschnitt ein Trapez.

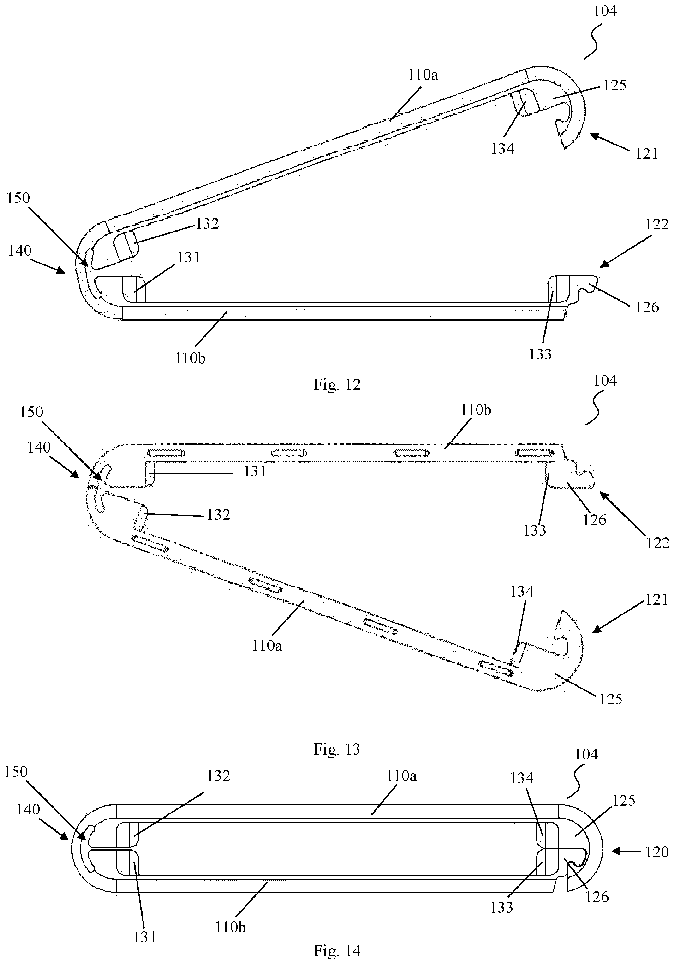

Mit Bezug auf die Figuren 12 bis 14 wird eine vierte Ausführungsform einer erfindungsgemäßen Klammer 104 nachfolgend näher erläutert. Die vorstehenden Ausführungen zur ersten Ausführungsform gelten im Wesentlichen auch für die vierte Ausführungsform. Nachfolgend werden lediglich die Unterschiede zur ersten Ausführungsform beschrieben, um unnötige Wiederholungen zu vermeiden.

Obwohl die vierte Ausführungsform entsprechend der Form der ersten Ausführungsform dargestellt ist, d.h. die Längselemente 110a, 110b, der Endabschnitt 140 und das Verschlusselement 120 sind nach oben abgerundet, sind die anhand der zweiten und dritten Ausführungsformen beschriebenen Ausgestaltungen (rechteckig und trapezförmig) auch auf die vierte Ausführungsform übertragbar.

Die vierte Ausführungsform unterscheidet sich von der ersten Ausführungsform im Wesentlichen in der Ausgestaltung bzw. Ausrichtung des Verschlusselements 120. Die vierte Ausführungsform weist ebenfalls ein erstes Verschlusselement 121 und ein zweites Verschlusselement 122 auf. Wie in der ersten Ausführungsform weist das erste Verschlusselement 121 einen U-förmigen Bügel 125 und das zweite Verschlusselement 122 weist eine entsprechende Ausbuchtung 126 auf.

Wie in der ersten Ausführungsform ist der U-förmige Bügel 125 der vierten Ausführungsform am ersten Längselement 110a angeordnet.

Im Gegensatz zur ersten Ausführungsform ist der U-förmige Bügel 125 der vierten Ausführungsform zur Innenseite der Klammer 104 geöffnet. Mit anderen Worten, die Öffnung des U-förmigen Bügels 125 der vierten Ausführungsform ist parallel zur Längsrichtung des ersten Längselements 110a ausgebildet. Im Gegensatz zur ersten Ausführungsform, bei der die Öffnung des U-förmigen Bügels 123 senkrecht zur Längsrichtung des ersten Längselements 110a ausgebildet ist.

Dementsprechend ist die Ausbuchtung 126 so ausgebildet, dass sie in der Öffnung des U-förmigen Bügels 125 aufgenommen werden kann.

Der U-förmige Bügel 125 weist an einem Ende eines seiner Schenkel einen nach innen gerichteten Vorsprung auf.

Das zweite Verschlusselement 122 weist ferner eine Ausnehmung aus, in die der Vorsprung des U-förmigen Bügels 125 eingreifen kann, um die Klammer 104 in einem geschlossenen Zustand zu halten.

Zusammenfassend unterscheidet sich die vierte Ausführungsform von der ersten Ausführungsform in der Ausrichtung des ersten und zweiten Verschlusselements 121, 122. Ferner ist der Verschluss der vierten Ausführungsform im verbauten Zustand sichtbar.

Im Unterschied zur ersten Ausführungsform weist die vierte Ausführungsform ein zusätzliches Element auf, das es ermöglicht, den Überriss über die Auswölbung zu ziehen bzw. zu schieben. Dieses zusätzliche Element kann beispielsweise eine Ausnehmung für Fingernägel sein. Das Öffnen umfasst im Unterschied zur ersten Ausführungsform somit den weiteren Schritt des Ziehens bzw. Schiebens des Überrisses über die Auswölbung.

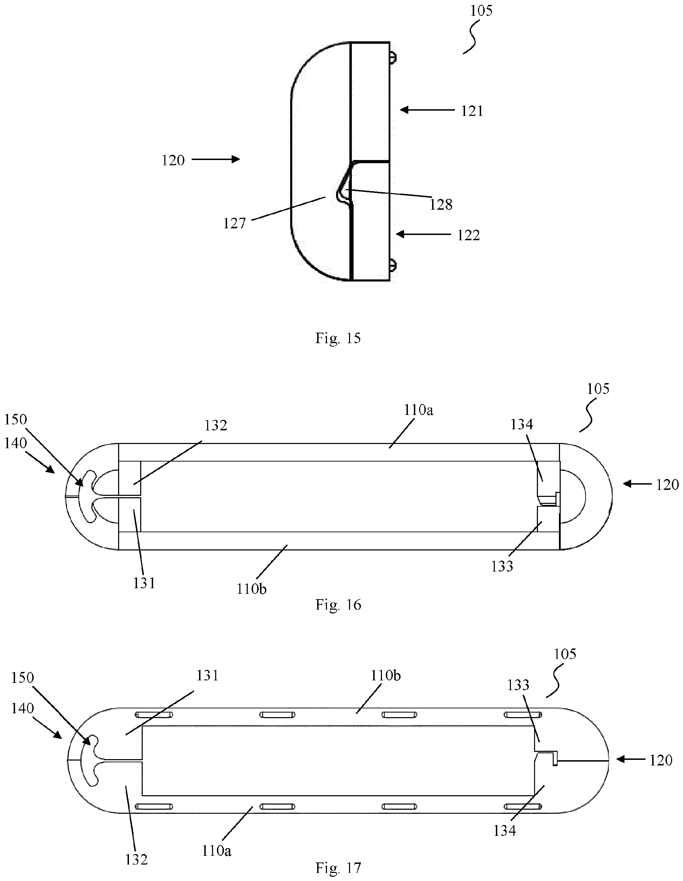

Mit Bezug auf die Figuren 15 bis 17 wird eine fünfte Ausführungsform einer erfindungsgemäßen Klammer 105 nachfolgend näher erläutert. Die vorstehenden Ausführungen zur ersten Ausführungsform gelten im Wesentlichen auch für die fünfte Ausführungsform. Nachfolgend werden lediglich die Unterschiede zur ersten Ausführungsform beschrieben, um unnötige Wiederholungen zu vermeiden.

Obwohl die fünfte Ausführungsform entsprechend der Form der ersten Ausführungsform dargestellt ist, d.h. die Längselemente 110a, 110b, der Endabschnitt 140 und das Verschlusselement 120 sind nach oben abgerundet, sind die anhand der zweiten und dritten Ausführungsformen beschriebenen Ausgestaltungen (rechteckig und trapezförmig) auch auf die fünfte Ausführungsform übertragbar.

Die fünfte Ausführungsform unterscheidet sich von der ersten Ausführungsform im Wesentlichen in der Ausgestaltung des Verschlusselements 120.

Das Verschlusselement weist ein erstes Verschlusselement 121 und ein zweites Verschlusselement 122 auf. Das erste Verschlusselement 121 weist eine Ausnehmung 127 auf einer Unterseite auf. Das zweite Verschlusselement 122 weist eine entsprechende Ausbuchtung 128 auf einer Oberseite auf.

Die Ausnehmung 127 und die Ausbuchtung 128 sind an der Stirnseite der Klammer 105 bzw. der Stirnseite des Verschlusselements 120 ausgebildet und konfiguriert ineinander zu greifen, um die Klammer 105 in einem geschlossenen Zustand zu halten.

Die Ausbuchtung 128 weist in der fünften Ausführungsform in Richtung des zweiten Längselements 110b eine erste Steigung auf und in Richtung des ersten Längselements 110a eine zweite Steigung auf, wobei die erste Steigung größer (steiler) als die zweite Steigung ist. Die Ausnehmung 127 ist in Entsprechung ausgebildet.

Diese Ausgestaltung erleichtert das Verschließen der Klammer 105 durch einen geringen Widerstand durch die Ausbuchtung 128, wenn das erste Verschlusselement 121 über das zweite Verschlusselement 122 zum Verschließen bewegt wird. Gleichzeitig ist die Schließkraft durch die steilere Neigung auf der anderen Seite der Ausbuchtung 128 erhöht, da ein größerer Kraftaufwand nötig ist, um das erste Verschlusselement 121 über das zweite Verschlusselement 122 zum Öffnen der Klammer 105 zu bewegen.

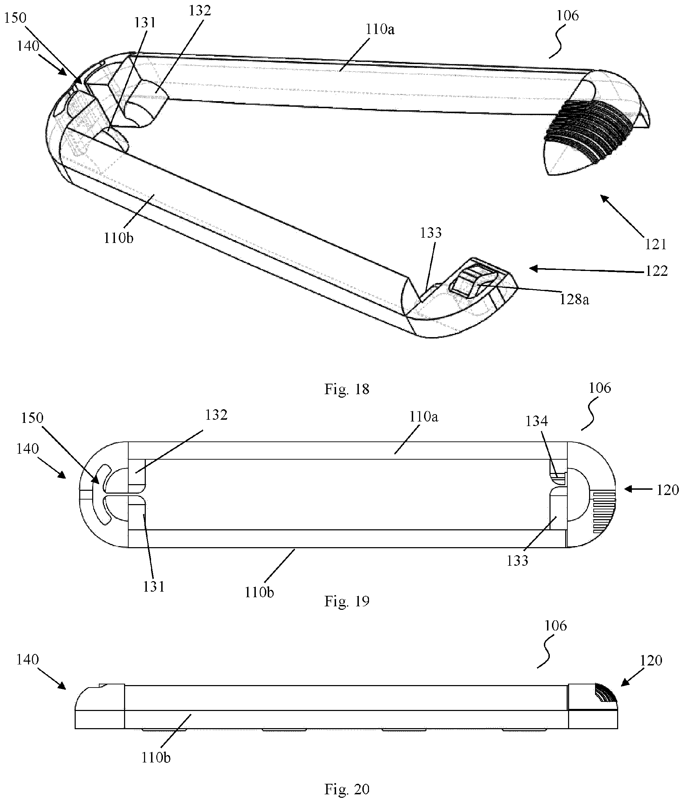

Mit Bezug auf die Figuren 18 bis 20 wird eine sechste Ausführungsform einer erfindungsgemäßen Klammer 106 nachfolgend näher erläutert. Die vorstehenden Ausführungen zur ersten Ausführungsform gelten im Wesentlichen auch für die sechste Ausführungsform. Nachfolgend werden lediglich die Unterschiede zur ersten Ausführungsform beschrieben, um unnötige Wiederholungen zu vermeiden.

Obwohl die sechste Ausführungsform entsprechend der Form der ersten Ausführungsform dargestellt ist, d.h. die Längselemente 110a, 110b, der Endabschnitt 140 und das Verschlusselement 120 sind nach oben abgerundet, sind die anhand der zweiten und dritten Ausführungsformen beschriebenen Ausgestaltungen (rechteckig und trapezförmig) auch auf die sechste Ausführungsform übertragbar.

Die sechste Ausführungsform unterscheidet sich von der ersten Ausführungsform im Wesentlichen in der Ausgestaltung des Verschlusselements 120.

Ähnlich der fünften Ausführungsform weist das Verschlusselement 120 der sechsten Ausführungsform eine Ausnehmung (nicht gezeigt) auf der Unterseite des ersten Verschlusselements 121 und eine Ausbuchtung 128a auf der Oberseite des zweiten Verschlusselements 122 auf.

Die Ausnehmung auf der Unterseite des ersten Verschlusselements 121 ist so ausgebildet, dass die Ausbuchtung 128a auch die Oberseite des zweiten Verschlusselements 122 aufnehmen kann, um die Klammer 106 in einem geschlossenen Zustand zu halten.

Die Ausnehmung und die Ausbuchtung 128a weisen jeweils einen Abstand zu den Kanten des ersten und zweiten Verschlusselements 121, 122 auf.

Die Ausbuchtung 128a weist in der sechsten Ausführungsform in Richtung des zweiten Längselements 110b eine erste Steigung auf und in Richtung des ersten Längselements 110a eine zweite Steigung auf, wobei die erste Steigung gleich der zweiten Steigung ist. Die Ausnehmung auf der Unterseite des ersten Verschlusselements 121 ist in Entsprechung ausgebildet.

Durch diese Ausgestaltung wird ein gleichmäßiger Widerstand beim Verschließen und beim Öffnen bereitgestellt.

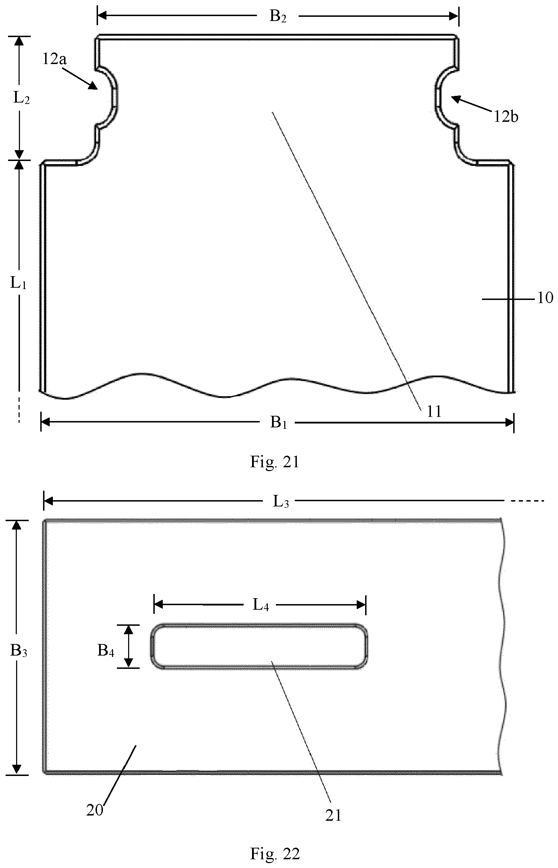

Fig. 21 zeigt ein erstes Bauelement 10 mit einem Randabschnitt 11. Der Randabschnitt 11 weist an gegenüberliegenden Endbereichen jeweils eine Einbuchtung 12a, 12b auf.

Das erste Bauelement 10 ist vorzugsweise ein Plattenelement, das sich flächig erstreckt und eine Dicke D aufweist. Mit anderen Worten, das erste Bauelement 10 erstreckt sich flächig in zwei Raumrichtungen um eine erste Länge L₁ und eine erste Breite B₁. Das Bauelement weist zudem eine Dicke D in einer dritten Raumrichtung auf, wobei die Länge L₁ und die Breite B₁ >> als die Dicke D sind. Die vorstehend genannten Raumrichtungen stehen jeweils senkrecht aufeinander.

Der Randabschnitt 11 erstreckt sich von einem Endabschnitt des ersten Bauelements 10 und weist eine zweite Länge L₂ und eine zweite Breite B₂ auf, wobei vorzugsweise L₁ > L₂ und B₁ > B₂. Die Dicke des Randabschnitts 11 ist vorzugsweise gleich der Dicke D des ersten Bauelements 10.

Die vorstehend genannten Längen L₁, L₂ sind nicht zwingend in diesem Verhältnis vorgesehen. Vielmehr kann die zweite Länge L₂ ≥ L₁ sein. Ferner kann die Dicke des Randabschnitts 11 von der Dicke D des ersten Bauelements 10 verschieden sein.

Die Einbuchtungen 12a, 12b sind an den Endbereichen des Randabschnitts 11 in Breitenrichtung vorgesehen und vorzugsweise abgerundet, d.h. die Einbuchtungen 12a, 12b sind bevorzugt in einer runden Form vorgesehen.

Die Einbuchtungen 12a, 12b können, wie in Fig. 21 gezeigt, in einem gewissen Abstand nach oben und unten (in Längenrichtung L₂) vom Randabschnitt 11 vorgesehen sein. Alternativ können die Einbuchtungen 12a, 12b am unteren Ende (in Längenrichtung L₂) vorgesehen sein, d.h. die Einbuchtungen 12a, 12b können sich direkt vom Endbereich des ersten Bauelements 10 erstrecken.

Sowohl die abgerundete Form der Einbuchtungen 12a, 12b als auch die abgerundete Form der vorstehend beschriebenen Haltesegmente 131-134 sorgen dafür, dass die Haltesegmente 131-134 leicht in die Einbuchtungen 12a, 12b eingebracht werden können.

Die Einbuchtungen 12a, 12b erstrecken sich ferner so weit in Längenrichtung des Randabschnitts 11, dass die Einbuchtungen 12a, 12b zumindest teilweise durch ein nachfolgend näher beschriebenes Langloch eines zweiten Bauelements ragen.

Fig. 22 zeigt ein zweites Bauelement 20 mit einem Langloch 21. Das Bauelement 20 weist eine Länge L₃ und eine Breite B₃ auf. Das Langloch 21 weist eine Länge L₄ und eine Breite B₄ auf, wobei L₃ > L₄ und B₃ > B₄.

Die Länge L₄ des Langlochs 21 ist größer als die Breite B₂ des Randabschnitts 11 und die Breite B₄ des Langlochs 21 ist größer als die Dicke des Randabschnitts 11 (vgl. Beschreibung des Randabschnitts gemäß Fig. 21), sodass der Randabschnitt 11 durch das Langloch 21 hindurch geführt werden kann.

Ferner ist die Länge L₄ des Langlochs 21 geringer als die Breite B₁ des ersten Bauelements 10, sodass lediglich der Randabschnitt 11 durch das Langloch 21 ragen kann.

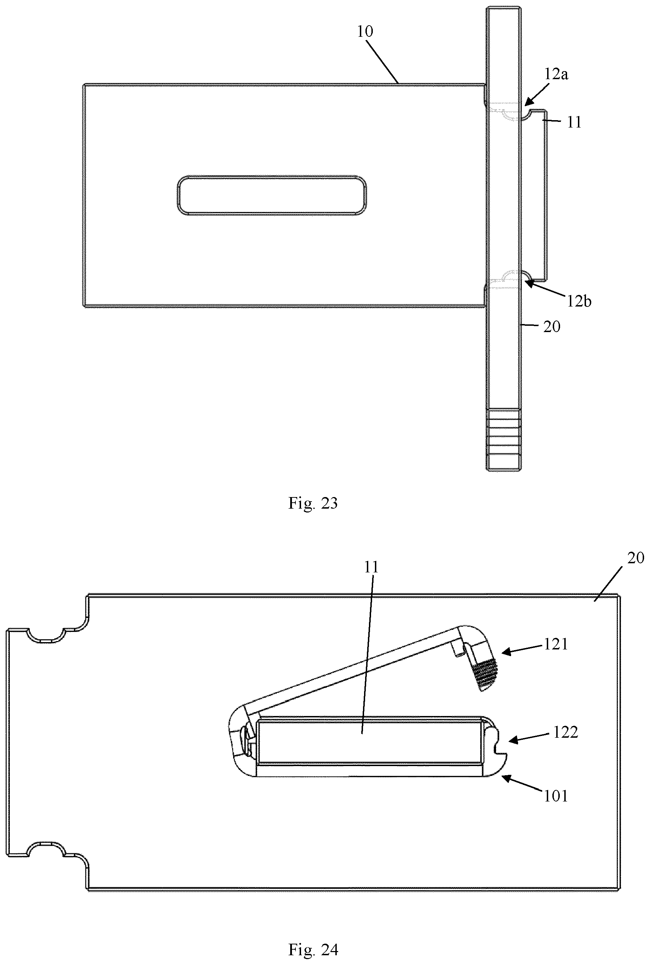

Fig. 23 zeigt das erste Bauelement 10 und das zweite Bauelement 20 in einem Zustand, in dem der Randabschnitt 11 durch das Langloch 21 ragt. Wie aus Fig. 23 ersichtlich ragt der Randabschnitt 11 so weit aus dem Langloch 21, dass die Einbuchtungen 12a, 12b zumindest teilweise aus dem Langloch 21 hinausragen.

Wie in Fig. 23 gezeigt, kann das erste Bauelement 10 neben dem Randabschnitt 11 zusätzlich ein Langloch aufweisen und das zweite Bauelement 20 kann neben dem Langloch 21 zusätzlich einen Randabschnitt aufweisen. Ferner kann das erste Bauelement 10 und/oder das zweite Bauelement 20 mehrere Randabschnitte und/oder Langlöcher aufweisen.

Fig. 24 zeigt einen Zustand gemäß Fig. 23 aus einer anderen Perspektive, d.h. einen Zustand in dem der Randabschnitt 11 durch das Langloch 21 gesteckt wurde. Zusätzlich zeigt Fig. 24 eine Klammer 101, die in einem geöffneten Zustand an dem Randabschnitt angebracht ist.

Die Haltesegmente 131, 133 und teilweise das Haltesegment 132 stehen in diesem Zustand bereits mit den Einbuchtungen 12a, 12b in Eingriff.

Mit anderen Worten, gemäß Fig. 24 wird die Klammer 101 am Randabschnitt 11 des ersten Bauelements 10 platziert und die Haltesegmente 131, 132 und 133 werden in den Einbuchtungen 12a, 12b platziert.

Zum Schließen der Klammer 101 wird anschließend die Klammer 101 geschlossen, indem das erste Verschlusselement 121 über das zweite Verschlusselement 122 geführt wird und somit das Haltesegment 134 ebenfalls mit der entsprechenden Einbuchtung in Eingriff gebracht wird.

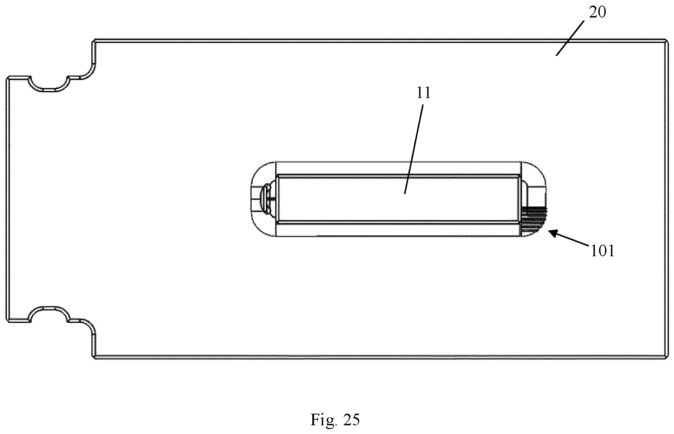

Durch die Einbuchtungen 12a, 12b wird eine Kraft auf die Haltesegmente 131-134 ausgeübt und die Klammer 101 wird in Position gehalten. Der geschlossene Zustand der Klammer 101 ist in Fig. 25 gezeigt.

Die Klammer 101 kann durch eine äußere Krafteinwirkung wieder geöffnet werden, indem das erste Verschlusselement 121 von dem zweiten Verschlusselement 122 weggedrückt wird.

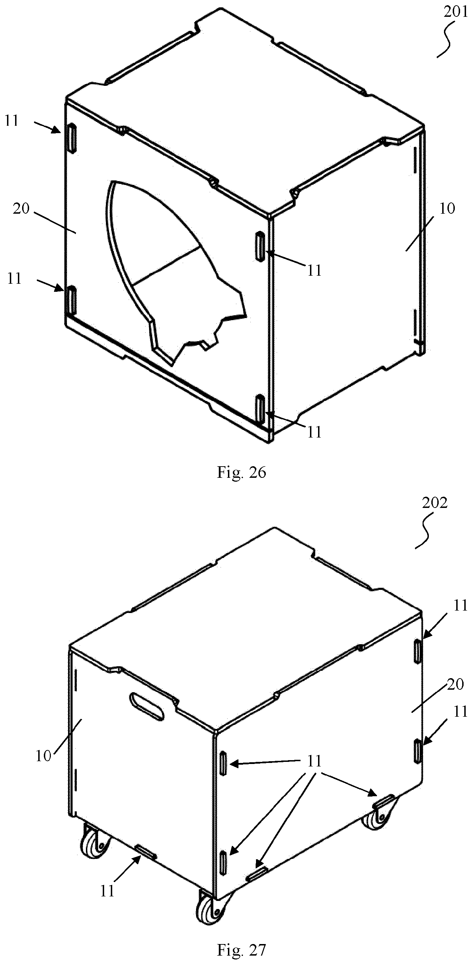

Die Figuren 26 und 27 zeigen Anwendungssysteme der vorstehend beschriebenen Aspekte der Erfindung. Fig. 26 zeigt ein beispielhaftes modulares Regalsystem 201 bestehend aus mehreren Plattenelementen, die wie vorstehend beschrieben mit einem oder mehreren Randabschnitten 11 bzw. Langlöchern 21 ausgestaltet sind. Zur Befestigung der verschiedenen Plattenelemente werden die vorstehend beschriebenen Klammern (nicht gezeigt) verwendet.

Fig. 27 zeigt eine beispielhafte Rollbox 202 bestehend aus mehreren Plattenelementen, die wie vorstehend beschrieben mit einem oder mehreren Randabschnitten 11 bzw. Langlöchern 21 ausgestaltet sind. Zur Befestigung der verschiedenen Plattenelemente werden die vorstehend beschriebenen Klammern (nicht gezeigt) verwendet. Zusätzliche Rollen sind an der Unterseite der Rollbox angebracht.

Wie in den Figuren 26 und 27 gezeigt, ist es nicht notwendig, dass alle Plattenelemente des entsprechenden Systems Langlöcher bzw. Randabschnitte aufweisen. Gewisse Plattenelemente, z.B. der Deckel, können auch ohne diese Elemente vorgesehen werden.

Mit anderen Worten, es ist erfindungsgemäß ausreichend mindestens ein Plattenelement mit mindestens einem Randabschnitt und mindestens ein Plattenelement mit mindestens einem Langloch, wie vorstehend beschrieben, in einem entsprechenden Anwendungssystem bereitzustellen.

Die Anwendungssysteme der Figuren 26 und 27 sind lediglich beispielhaft und können in verschiedensten Ausgestaltungen unter Verwendung der Erfindung bereitgestellt werden. Weitere beispielhafte Anwendungssysteme betreffen Möbelsysteme, Ordnungs- oder Aufbewahrungssysteme, Point-of-Sale-Displays, Möbelsysteme oder Unterkünfte für Haustiere, Bilderrahmen oder Transportverpackungen.

Möbelsysteme oder Unterkünfte für Haustiere umfassen verschiedene Gebrauchsgegenstände, die im Zusammenhang mit Haustieren innerhalb oder außerhalb von Wohnungen und Häusern verwendet werden, wie z.B. Schlafplätze, Spielgeräte und Kratzbäume etc.

Die Klammer 101 ist nur exemplarisch in den Figuren 24-25 gezeigt. Es sollte klar sein, dass alle vorstehend beschriebenen Klammern 101-106 zur Befestigung des ersten Plattenelements 10 und des zweiten Plattenelements 20 in gleicher Weise verwendet werden können.

Während die vorliegende Erfindung hier unter Bezug auf ihre bevorzugten Ausführungsformen beschrieben und dargestellt wurde, ist für Fachleute auf dem Gebiet offensichtlich, dass verschiedene Modifikationen und Änderungen daran vorgenommen werden können, ohne den Schutzbereich der Erfindung zu verlassen. Auf diese Weise ist beabsichtigt, dass die vorliegende Erfindung die Modifikationen und Änderungen dieser Erfindung abdeckt, sofern sie in den Schutzbereich der beigefügten Patentansprüche fallen Ferner sind Merkmale, die in Verbindung mit einer bestimmten Ausführungsform beschrieben wurden, nicht ausschließlich in Verbindung mit anderen Merkmalen dieser Ausführungsform zu verstehen. Es ist vielmehr klar, dass eine Kombination von Merkmalen aus verschiedenen Ausführungsformen ebenfalls möglich ist. Auch ein in Verbindung mit einem anderen Merkmal beschriebenes Merkmal kann in einer möglichen Ausführungsform gemäß der vorliegenden Erfindung ohne das andere Merkmal vorhanden sein.

## Patentansprüche

1. System mit mindestens einem ersten Bauelement (10), insbesondere einem ersten Plattenelement, und mindestens einem zweiten Bauelement (20), insbesondere einem zweiten Plattenelement, wobei das erste Bauelement (10) mindestens einen vorstehenden Randabschnitt (11) aufweist, wobei der Randabschnitt (11) an seinen entgegengesetzten Endbereichen jeweils eine Einbuchtung (12a, 12b) aufweist und das zweite Bauelement (20) mindestens ein Langloch (21) aufweist, wobei der Randabschnitt (11) das Langloch (21) in einem zusammengebauten Zustand durchdringt und mindestens so weit aus dem Langloch (21) herausragt, dass die Einbuchtungen (12a, 12b) zumindest teilweise aus dem Langloch (21) herausragen,
wobei das System ferner mindestens eine Klammer aufweist, um die Bauelemente (10, 20) lösbar miteinander zu verbinden,
wobei die Klammer aufweist:
zwei Längselemente (110a, 110b) mit jeweils einem ersten und einem zweiten Ende, wobei die zwei Längselemente (110a, 110b) an dem jeweiligen ersten Ende beweglich miteinander verbunden sind;
ein Verschlusselement (120), das an dem zweiten Ende mindestens eines Längselements (110a, 110b) vorgesehen ist, wobei das Verschlusselement (120) konfiguriert ist die zweiten Enden der Längselemente (110a, 110b) lösbar zu verbinden; und
mindestens zwei Haltesegmente (131, 132, 133, 134), die in gegenüberliegenden Endbereichen der Längselemente (110a, 110b) vorgesehen sind und konfiguriert sind, jeweils mit den Einbuchtungen (12a, 12b) des Randabschnitts (11) des ersten Bauelements (10) in Eingriff gebracht zu werden und die Bauelemente (10, 20) lösbar miteinander zu verbinden.

2. System nach Anspruch 1, wobei die mindestens zwei Haltesegmente (131, 132, 133, 134) eine maximale erste Höhe aufweisen und das erste und/oder zweite Längselement (110a, 110b) eine minimale zweite Höhe aufweist, wobei die erste Höhe geringer als die zweite Höhe ist.

3. System nach Anspruch 2, wobei die erste Höhe einer Höhe entspricht, um die die Einbuchtungen (12a, 12b) aus dem Langloch (21) herausragen.

4. System nach einem der Ansprüche 1 bis 3, ferner aufweisend einen Endabschnitt (140), der konfiguriert ist die beiden Längselemente (110a, 110b) beweglich zu verbinden und/oder wobei der Endabschnitt (140) und/oder das Verschlusselement (120) eine minimale dritte Höhe aufweist, wobei die erste Höhe geringer als die dritte Höhe ist.

5. System nach Anspruch 4, wobei die zweite Höhe im Wesentlichen gleich der dritten Höhe ist und/oder wobei die zweite und/oder dritte Höhe mindestens der Länge entspricht/entsprechen, die der Randabschnitt (11) aus dem Langloch (21) herausragt.

6. System nach einem der Ansprüche 1 bis 5, wobei der Endabschnitt (140) und/oder das Verschlusselement (120) und/oder die zwei Längselemente (110a, 110b) mit dem Randabschnitt (11), der durch das Langloch (21) ragt, bündig abschließt/abschließen.

7. System nach Anspruch 5, wobei der Endabschnitt (140), das Verschlusselement (120) und die zwei Längselemente (110a, 110b) mit dem Randabschnitt (11), der durch das Langloch (21) ragt, bündig abschließen.

8. System nach einem der Ansprüche 1 bis 7, wobei mindestens ein Haltesegment (131, 132) mit dem Endabschnitt (140) und mindestens ein Haltesegment (133, 134) mit dem Verschlusselement (120) verbunden ist und/oder wobei die mindestens zwei Haltesegmente (130) vier Haltesegmente (131, 132, 133, 134) aufweisen.

9. System nach Anspruch 8, wobei die vier Haltesegmente gegenüberliegend in den jeweiligen Endbereichen der Längselemente (110a, 110b) angeordnet sind.

10. System nach einem der Ansprüche 1 bis 9, wobei das Verschlusselement (120) ein erstes Verschlusselement (121) und ein zweites Verschlusselement (122) aufweist, die formschlüssig zusammenwirken können.

11. System nach Anspruch 10, wobei das erste Verschlusselement (121) eine Ausnehmung (127) auf seiner Unterseite aufweist und das zweite Verschlusselement (122) eine Ausbuchtung (128, 128a) auf seiner Oberseite aufweist, die mit der Ausnehmung (127) verschließbar zusammenwirken kann oder wobei das erste Verschlusselement (121) einen U-förmigen Bügel (123, 125) aufweist und das zweite Verschlusselement (122) eine Ausbuchtung (124, 126) aufweist, die mit dem U-förmigen Bügel (123, 125) verschließbar zusammenwirken kann.

12. System nach einem der Ansprüche 1 bis 11, wobei die bewegliche Verbindung der zwei Längselemente (110a, 110b) eine Vorspannung aufweist, so dass sich das Verschlusselement (120) ohne äußere Krafteinwirkung in einem geöffneten Zustand befindet und/oder wobei die Einbuchtungen (12a, 12b) an den entgegengesetzten Endbereichen des Randabschnitts (11) gleich groß sind und/oder wobei die Längselemente (110a, 110b) in einer Ebene liegen und die Klammer in beiden Richtungen senkrecht zu der Ebene offen ist.

13. Verfahren zum lösbaren Verbinden eines ersten Bauelements (10), insbesondere eines ersten Plattenelements, mit einem zweiten Bauelement (20), insbesondere einem zweiten Plattenelement, wobei das erste Bauelement (10) mindestens einen vorstehenden Randabschnitt (11) aufweist, wobei der mindestens eine Randabschnitt (11) an seinen entgegengesetzten Endbereichen jeweils eine Einbuchtung (12a, 12b) aufweist und das zweite Bauelement (20) mindestens ein Langloch (21) aufweist, wobei das Verfahren aufweist:
Durchführen des Randabschnitts (11) durch das Langloch (21), so dass mindestens ein Teil des Randabschnitts (11) so weit aus dem Langloch (21) herausragt, dass die Einbuchtungen (12a, 12b) zumindest teilweise aus dem Langloch (21) herausragen; und
lösbares Verbinden des ersten Bauelements (10) mit dem zweiten Bauelement (20) unter Verwendung einer Klammer,
wobei die Klammer aufweist:
zwei Längselemente (110a, 110b) mit jeweils einem ersten und einem zweiten Ende, wobei die zwei Längselemente (110a, 110b) an dem jeweiligen ersten Ende beweglich miteinander verbunden sind;
ein Verschlusselement (120), das an dem zweiten Ende mindestens eines Längselements (110a, 110b) vorgesehen ist, wobei das Verschlusselement (120) konfiguriert ist die zweiten Enden der Längselemente (110a, 110b) lösbar zu verbinden; und
mindestens zwei Haltesegmente (131, 132, 133, 134), die in gegenüberliegenden Endbereichen der Längselemente (110a, 110b) vorgesehen sind und konfiguriert sind, jeweils mit den Einbuchtungen (12a, 12b) des Randabschnitts (11) des ersten Bauelements (10) in Eingriff gebracht zu werden und die Bauelemente (10, 20) lösbar miteinander zu verbinden.

14. Verwendung eines Systems nach einem der Ansprüche 1 bis 12 zum Zusammenbau eines Möbelsystems, eines Ordnungs- oder Aufbewahrungssystems, eines Point-of-Sale-Displays, eines Möbelsystems oder einer Unterkunft für Haustiere, eines Bilderrahmens oder einer Transportverpackung.

## Claims

1. A system comprising at least a first component (10), in particular a first plate element, and at least a second component (20), in particular a second plate element, wherein the first component (10) comprises at least one projecting edge portion (11), wherein the edge portion (11) comprises a respective recess (12a, 12b) at its opposite end regions, and the second component (20) comprises at least one elongated hole (21), wherein the edge portion (11) penetrates the elongated hole (21) in an assembled state and projects out of the elongated hole (21) at least so far that the recesses (12a, 12b) project at least partly out of the elongated hole (21),
wherein the system further comprises at least one clip to releasably connect the components (10, 20) to each other,
wherein the clip comprises:
two longitudinal elements (110a, 110b) each having a first and a second end, wherein the two longitudinal elements (110a, 110b) are movably connected to each other at the respective first end;
a closure element (120) provided at the second end of at least one longitudinal element (110a, 110b), wherein the closure element (120) is configured to releasably connect the second ends of the longitudinal elements (110a, 110b); and
at least two holding segments (131, 132, 133, 134) which are provided in opposite end regions of the longitudinal elements (110a, 110b) and which are configured to be engaged with the respective recesses (12a, 12b) of the edge portion (11) of the first component (10) and releasably connect the components (10, 20) to each other.

2. The system according to claim 1, wherein the at least two holding segments (131, 132, 133, 134) have a maximum first height and the first and/or the second longitudinal element (110a, 110b) has a minimum second height, wherein the first height is lower than the second height.

3. The system according to claim 2, wherein the first height corresponds to a height by which the recesses (12a, 12b) project out of the elongated hole (21).

4. The system according to any one of claims 1 to 3, further comprising an end portion (140) which is configured to connect the two longitudinal elements (110a, 110b) in a movable manner and/or wherein the end portion (140) and/or the closure element (120) has a minimum third height, wherein the first height is lower than the third height.

5. The system according to claim 4, wherein the second height is essentially equal to the third height and/or wherein the second and/or the third height correspond(s) at least to the length by which the edge portion (11) projects out of the elongated hole (21).

6. The system according to any one of claims 1 to 5, wherein the end portion (140) and/or the closure element (120) and/or the two longitudinal elements (110a, 110b) is/are flush with the edge portion (11) penetrating the elongated hole (21).

7. The system according to claim 5, wherein the end portion (140), the closure element (120) and the two longitudinal elements (110a, 110b) are flush with the edge portion (11) penetrating the elongated hole (21).

8. The system according to any one of claims 1 to 7, wherein at least one holding segment (131, 132) is connected to the end portion (140) and at least one holding segment (133, 134) is connected to the closure element (120) and/or wherein the at least two holding segments (130) comprise four holding segments (131, 132, 133, 134).

9. The system according to claim 8, wherein the four holding segments are arranged opposite to one another in the respective end regions of the longitudinal elements (110a, 110b).

10. The system according to any one of claims 1 to 9, wherein the closure element (120) comprises a first closure element (121) and a second closure element (122) which can cooperate in a positive manner.

11. The system according to claim 10, wherein the first closure element (121) has a recess (127) on its lower side and the second closure element (122) has a bulge (128, 128a) on its upper side, which can cooperate with the recess (127) in a closable manner, or wherein the first closure element (121) comprises a U-shaped bracket (123, 125) and the second closure element (122) comprises a bulge (124, 126), which can cooperate with the U-shaped bracket (123, 125) in a closable manner.

12. The system according to any one of claims 1 to 11, wherein the movable connection of the two longitudinal elements (110a, 110b) is prestressed so that without the application of an external force the closure element (120) is in an open state and/or wherein the recesses (12a, 12b) at the opposite end regions of the edge portion (11) can have the same size and/or wherein the longitudinal elements (110a, 110b) lie in one plane and the clip is open in both directions perpendicular with respect to the plane.

13. A method for releasably connecting a first component (10), in particular a first plate element, to a second component (20), in particular a second plate element, wherein the first component (10) comprises at least one projecting edge portion (11), wherein the at least one edge portion (11) comprises a respective recess (12a, 12b) at its opposite end regions, and the second component (20) comprises at least one elongated hole (21), wherein the method comprises:
passing the edge portion (11) through the elongated hole (21), so that at least a part of the edge portion (11) projects out of the elongated hole (21) so far that the recesses (12a, 12b) project at least partly out of the elongated hole (21); and
releasably connecting the first component (10) to the second component (20) by using a clip,
wherein the clip comprises:
two longitudinal elements (110a, 110b) each having a first and a second end, wherein the two longitudinal elements (110a, 110b) are movably connected to each other at the respective first end;
a closure element (120) provided at the second end of at least one longitudinal element (110a, 110b), wherein the closure element (120) is configured to releasably connect the second ends of the longitudinal elements (110a, 110b); and
at least two holding segments (131, 132, 133, 134) which are provided in opposite end regions of the longitudinal elements (110a, 110b) and which are configured to be engaged with the respective recesses (12a, 12b) of the edge portion (11) of the first component (10) and releasably connect the components (10, 20) to each other.

14. Use of a system according to any one of claims 1 to 12 for assembling a furniture system, an organization or storage system, a point-of-sale display, a furniture system or housing for pets, a picture frame or a transport packaging.

## Revendications

1. Système ayant au moins un premier composant (10), en particulier un premier élément de plaque, et au moins un deuxième composant (20), en particulier un deuxième élément de plaque, où le premier composant (10) présente au moins une partie de bord (11) en saillie, où la partie de bord (11) présente une échancrure (12a, 12b) dans chacune de ses zones d'extrémité opposées et où le deuxième composant (20) présente au moins un trou oblong (21), où la partie de bord (11) est engagée dans le trou oblong (21) en état de montage et fait saillie hors du trou oblong (21) d'au moins une longueur telle que les échancrures (12a, 12b) ressortent au moins partiellement du trou oblong (21),
où le système présente en outre au moins une agrafe permettant de raccorder les composants (10, 20) entre eux de manière amovible,
où l'agrafe présente :
deux éléments oblongs (110a, 110b) ayant chacun une première et une deuxième extrémité, lesdits deux éléments oblongs (110a, 110b) étant raccordés l'un à l'autre de manière mobile à leur première extrémité respective ;
un élément de fermeture (120), prévu à la deuxième extrémité d'au moins un élément oblong (110a, 110b), ledit élément de fermeture (120) étant prévu pour raccorder les deuxièmes extrémités des éléments oblongs (110a, 110b) de manière amovible ; et
au moins deux segments de retenue (131, 132, 133, 134), prévus dans des zones d'extrémité opposées des éléments oblongs (110a, 110b) et destinés à être mis en contact avec les échancrures (12a, 12b) respectives de la partie de bord (11) du premier composant (10) et pour raccorder les composants (10, 20) entre eux de manière amovible.

2. Système selon la revendication 1, où les au moins deux segments de retenue (131, 132, 133, 134) présentent une première hauteur maximale, et où le premier et/ou le deuxième élément oblong (110a, 110b) présentent une deuxième hauteur minimale, la première hauteur étant inférieure à la deuxième hauteur.

3. Système selon la revendication 2, où la première hauteur correspond à la hauteur de saillie des échancrures (12a, 12b) hors du trou oblong (21).

4. Système selon l'une des revendications 1 à 3, présentant en outre une partie d'extrémité (140) destinée à raccorder les deux éléments oblongs (110a, 110b) de manière mobile et/ou où la partie d'extrémité (140) et/ou l'élément de fermeture (120) présentent une troisième hauteur minimale, la première hauteur étant inférieure à la troisième hauteur.

5. Système selon la revendication 4, où la deuxième hauteur est sensiblement égale à la troisième hauteur et/ou où la deuxième et/ou la troisième hauteur correspondent au moins à la longueur de saillie de la partie de bord (11) hors du trou oblong (21).

6. Système selon l'une des revendications 1 à 5, où la partie d'extrémité (140) et/ou l'élément de fermeture (120) et/ou les deux éléments oblongs (110a, 110b) affleurent la partie de bord (11) faisant saillie hors du trou oblong (21).

7. Système selon la revendication 5, où la partie d'extrémité (140), l'élément de fermeture (120) et les deux éléments oblongs (110a, 110b) affleurent la partie de bord (11) faisant saillie hors du trou oblong (21).

8. Système selon l'une des revendications 1 à 7, où au moins un segment de retenue (131, 132) est raccordé à la partie d'extrémité (140) et au moins un segment de retenue (133, 134) est raccordé à l'élément de fermeture (120) et/ou où les au moins deux segments de retenue (130) comprennent quatre segments de retenue (131, 132, 133, 134).

9. Système selon la revendication 8, où les quatre segments de retenue sont disposés en vis-à-vis dans les zones d'extrémité respectives des éléments oblongs (110a, 110b).

10. Système selon l'une des revendications 1 à 9, où l'élément de fermeture (120) comprend un premier élément de fermeture (121) et un deuxième élément de fermeture (122) aptes à coopérer par correspondance de forme.

11. Système selon la revendication 10, où le premier élément de fermeture (121) présente un évidement (127) sur son côté inférieur et où le deuxième élément de fermeture (122) présente une protubérance (128, 128a) sur son côté supérieur, laquelle peut coopérer pour verrouillage avec l'évidement (127), ou où le premier élément de fermeture (121) présente un étrier en U (123, 125) et le deuxième élément de fermeture (122) une protubérance (124, 126) pouvant coopérer pour verrouillage avec l'étrier en U (123, 125).

12. Système selon l'une des revendications 1 à 11, où le raccord mobile des deux éléments oblongs (110a, 110b) présente une précontrainte telle que l'élément de fermeture (120) se trouve en état d'ouverture sans application d'une force extérieure et/ou où les échancrures (12a, 12b) aux zones d'extrémité opposées des partie de bord (11) sont de grandeur identique et/ou où les éléments oblongs (110a, 110b) se trouvent sur un plan et l'agrafe est ouverte perpendiculairement au plan dans les deux directions.

13. Procédé de raccordement amovible d'un premier composant (10), en particulier un premier élément de plaque, à un deuxième composant (20), en particulier un deuxième élément de plaque, où le premier composant (10) présente au moins une partie de bord (11) en saillie, où la au moins une partie de bord (11) présente une échancrure (12a, 12b) dans chacune de ses zones d'extrémité opposées et où le deuxième composant (20) présente au moins un trou oblong (21), ledit procédé comprenant :
l'engagement de la partie de bord (11) dans le trou oblong (21), de sorte qu'au moins une fraction de la partie de bord (11) fait saillie hors du trou oblong (21) d'une longueur telle que les échancrures (12a, 12b) ressortent au moins partiellement du trou oblong (21) ; et
le raccordement amovible du premier composant (10) au deuxième composant (20) en recourant à une agrafe,
où l'agrafe présente :
deux éléments oblongs (110a, 110b) ayant chacun une première et une deuxième extrémité, lesdits deux éléments oblongs (110a, 110b) étant raccordés l'un à l'autre de manière mobile à leur première extrémité respective ;
un élément de fermeture (120), prévu à la deuxième extrémité d'au moins un élément oblong (110a, 110b), ledit élément de fermeture (120) étant prévu pour raccorder les deuxièmes extrémités des éléments oblongs (110a, 110b) de manière amovible ; et
au moins deux segments de retenue (131, 132, 133, 134), prévus dans des zones d'extrémité opposées des éléments oblongs (110a, 110b) et destinés à être mis en contact avec les échancrures (12a, 12b) respectives de la partie de bord (11) du premier composant (10) et pour raccorder les composants (10, 20) entre eux de manière amovible.

14. Utilisation d'un système selon l'une des revendications 1 à 12 pour l'assemblage d'un système de meuble, d'un système de rangement ou de stockage, d'un présentoir sur point de vente, d'un système de meuble ou d'un abri pour animaux domestiques, d'un cadre photo ou d'un emballage de transport.
